# EUROPÄISCHE PATENTSCHRIFT

(11) **EP 1 606 092 B1**
(45) Veröffentlichungstag und Bekanntmachung des Hinweises auf die Patenterteilung: **06.02.2008**
(21) Anmeldenummer: 04718934.5
(22) Anmeldetag: 10.03.2004
(51) Int. Cl.: B29B 9/12, B29B 9/06

(54) **THERMOPLASTGRANULATE**
THERMOPLASTIC GRANULATES
GRANULATS THERMOPLASTIQUES

(30) Priorität: 13.03.2003 DE 10310829
(43) Veröffentlichungstag der Anmeldung: 21.12.2005
(73) Patentinhaber: BASF Aktiengesellschaft, 67056 Ludwigshafen (DE)
(72) Erfinder: GÜNTHERBERG, Norbert, 67346 Speyer (DE); CZAUDERNA, Bernhard, 69493 Hirschberg (DE); SAUER, Michael, 68766 Hockenheim (DE); BARDON, Rainer, 67125 Dannstadt-Schauernheim (DE); AN, YoHwan, Nam Ku, Ulsan City (KR)
(86) Internationale Anmeldenummer: PCT/EP2004/002433
(87) Internationale Veröffentlichungsnummer: WO 2004/080679

(56) Entgegenhaltungen:
- EP-A- 0 302 621
- EP-A- 1 275 483
- WO-A-01/96926
- WO-A-96/26241
- WO-A-99/52967
- DE-A- 19 849 485
- US-A- 3 058 159
- US-B1- 6 433 876
- PATENT ABSTRACTS OF JAPAN vol. 008, no. 212 (C-244), 27. September 1984 (1984-09-27) -& JP 59 096187 A (SHIN NIPPON SEITETSU KK; OTHERS: 01), 2. Juni 1984 (1984-06-02)
- PATENT ABSTRACTS OF JAPAN vol. 013, no. 560 (M-906), 13. Dezember 1989 (1989-12-13) -& JP 01 234212 A (MITSUBISHI YUKA BADISCHE CO LTD), 19. September 1989 (1989-09-19)
- MUNKES P: "AUTOMATISIERTE FARBMESSUNG UND FARBKORREKTUR BEIM AUFBEREITEN VON KUNSTSTOFFEN" TECHNISCHES MESSEN TM, R.OLDENBOURG VERLAG. MUNCHEN, DE, Bd. 59, Nr. 5, 1. Mai 1992 (1992-05-01), Seiten 221-225, XP000304360 ISSN: 0171-8096

## Beschreibung

Die vorliegende Erfindung betrifft Verfahren zur Herstellung von Granulaten auf der Basis mindestens eines thermoplastisch verarbeitbaren Polymeren, die weniger als 10 % konkave Stellen aufweisen und im übrigen an jeder anderen Stelle konvex sind, bestimmt anhand des Mittelwertes der Verhältnisse der Konturfläche zur Gesamtkonturfläche für ein Ensemble von Granulaten mittels Auflicht-Interferenzkontrastspektroskopie. Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden einzelnen Merkmale des erfindungsgemäßen Verfahrens nicht nur in der jeweils angegebenen Kombination, sondern auch in anderen Kombinationen verwendbar sind, ohne den Rahmen der Erfindung zu verlassen.

Formteile auf Kunstharzbasis, insbesondere wenn sie großflächig sind, gleichmäßig einzufärben, stellt häufig ein Problem dar. Ebenso ist es oft problematisch ein Formteil abgestimmt auf ein zweites Formteil einzufärben. Das Ziel Formteile auf Kunstharzbasis zu erhalten, die möglichst keine Stellen aufweisen, die intensiver und solche die weniger intensiv gefärbt sind, ist deshalb so schwierig zu erreichen, weil etliche Faktoren dazu beitragen können, dass die Einfärbung letztlich ungleichmäßig ist. Beispielsweise spielt die Art des Pigments, die Art des Kunststoffs oder die Art und Weise der mechanischen Durchmischung eine Rolle.

Es wurde gefunden, dass die eingangs definierten Granulate auf Kunstharzbasis verwendet werden können, um sehr präzise und homogen eingefärbte Formteile herzustellen. Aufgabe der vorliegenden Erfindung war es, ein verbessertes bzw. vereinfachtes Verfahren zu finden, mittels dessen sich diese Granulate erhalten lassen.

Verfahren mit Hilfe derer Polymerisate, die sich schmelzen lassen, unter Wasser granuliert werden können, sind bekannt. Hierbei wird das geschmolzene Polymere beispielsweise durch eine Düse gedrückt und der Schmelzefluss durch ein rotierendes Messer in Gegenwart von Wasser in kleine Stücke geteilt. Während dieses Vorgangs und danach kühlen die entstandenen Teilchen ab, wobei zunächst die Außenschicht erkaltet und später das Innere erstarrt. Der Abkühlvorgang schreitet von außen nach innen fort. Während des Abkühlens kann aus diesem Grund im Inneren des Teilchens ein Unterdruck entstehen. Dadurch kann die Außenschicht nach innen gezogen werden, und es kann sich im Inneren des Teilchens ein Hohlraum, Vakuole, bilden. Der Hohlraum kann sich während der Lagerung der Teilchen mit Gas oder Feuchtigkeit füllen (WO 96/26241). Um die Holraumbildung zu vermeiden, wird in der WO 96/26241 vorgeschlagen, den Polymerschmelzestrang vor dem Schneiden mit mindestens 44°C warmem Wasser in Kontakt zu bringen und dann zu granulieren. Bei der Verarbeitung zu Formteilen ergeben sich, wie aus der WO 96/26241 hervorgeht, sofern Vakuolen im Granulaten enthalten sind, Silberstreifen und Blasen auf der Oberfläche. Zu dem Problem der Herstellung gleichmäßig eingefärbter Formteile ist der WO 96/26241 nichts zu entnehmen.

Ein Verfahren zur Unterwassergranulierung wird in der WO 99/52967 offenbart, mit dem Granulate mit weniger als 10 Vol-% Vakuolen erhalten werden können. Gemäß dieser Schrift stören die Vakuolen bei der Weiterverarbeitung der Granulate und die Granulate selbst sind optisch nicht ansprechend. Bei diesem Verfahren werden die Polymere nach dem Extrudieren mit einer Kühlrate weniger als 50°C/s auf eine Temperatur abgekühlt, die 1 bis 20°C oberhalb der Glasübergangstemperatur T_{g} des Polymeren liegt. Anschließend werden die Polymeren geschnitten. Bevorzugt werden die Polymeren während des Schneidens auf unter 100°C abgekühlt, wobei das Kühlmedium nicht mehr als 370°C kälter als das Polymere sein soll. Der Polymerstrang kann hierzu mit Wasser besprüht werden, dessen Temperatur gemäß der Beschreibung von unter 30 bis 80°C liegen sollte. Alternativ wird das Polymere dadurch abgekühlt, dass es 3 bis 10s lang durch ein Wasserbad geleitet wird, dessen Temperatur 40 bis 80°C aufweist. Zu dem Problem, wie gleichmäßig eingefärbte Formteile erhalten werden können ist dieser Offenbarung nichts zu entnehmen. Auch wird ein Verfahren mittels dessen dellenarme Granulate hergestellt werden könnten, nicht offenbart.

Aus der US 4,385,016 geht ein Verfahren hervor, mittels dessen vor allem Granulate, die Gaseinschlüsse, nämlich Treibmittel, enthalten unter Wasser granuliert und transportiert werden können. Es wird erwähnt, dass einheitliche Granulate erhalten werden können. Beschreibungsgemäß passiert 83 bis 100°C warmes Wasser den Pelletierkopf und die Teilchen werden im Wasserbad auf eine Temperatur von 66 bis 100°C abgekühlt und mittels Wasser einer Temperatur von 94°C transportiert.

Von treibmittelhaltigen Harzen war es ferner bekannt, dass sie unter Überdruck oder bei reduzierten Drucken granuliert werden können, um das Aufschäumen genau zu kontrollieren(DE-A 198 19 058; US, 5,234,963).

Gemäß der JP-A 11-179724 wird bei der Unterwassergranulierung eine schlechte Granulatkonfiguration durch sich verstopfende Düsen hervorgerufen. Dies kann, so die Schrift, dadurch vermieden werden, dass das Wasser in der Schneidkammer mehr als 80°C aufweist, aber nicht sprudelt. Um dies zu vermeiden kann unter erhöhtem Druck granuliert werden. Das Wasser welches der Schneidkammer zugeführt wird, hat laut Beschreibung eine Temperatur von 40 bis 70°C.

EP-A 302 621 offenbart Verfahren zur Granulierung von Kunststoffen; insbesondere werden Düsenkonfigurationen beschrieben, die zur Unterwassergranulierung von Polymeren mit hohen Schmelzflussraten geeignet sind.

US 3,058,159 beschreibt Verfahren zur Herstellung von Kondensationsharzen in perlenähnlicher Form durch Versprühen einer Harzschmelze in eine Kühlzone.

JP-A 59 096 187 offenbart Verfahren zur Unterwassergranulierung von Pech einer bestimmten durch Temperaturkontrolle eingestellten Schmelz-Viskosität zur Erzielung von Granulatformen einheitlicher Qualität.

JP-A 01 234 212 beschreibt Verfahren zur Unterwassergranulierung von Thermoplastschmelzen, bei denen die Form der Granalien durch die Umlaufmenge und Temperatur des angewärmten Wassers sowie der zugeführten Thermoplastmenge beeinflusst werden.

EP-A 1 275 483 offenbart Granulierverfahren, bei dem die Granuliervorrichtung eine der Kühlflüssigkeit zugewandte Ausgangsseite und eine dem Polymer zugewandte Eingangsseite aufweist, und wobei die Granuliervorrichtung eine Vielzahl polymerführender und wärmeträgerführender Kanäle aufweist.

WO 01/96926 und US-B 6,433,876 beschreiben bestimmte Mikroskopsysteme und Mikroskopieverfahren zur Durchführung von Oberflächenbestimmungen.

Es wurde gefunden, dass Granulate, die möglichst frei von Dellen sind, sich sehr gut zu Fertigteilen verarbeiten, worin die Farbmittel sehr gleichmäßig verteilt sind. Bevorzugt werden aus verarbeitungstechnischen Gründen Granulate, die sowohl einen geringen Anteil an Dellen als auch an Vakuolen aufweisen.

Unter Granulat werden kleine Teilchen verstanden. Welche Größe die Granulate haben, ist frei wählbar, richtet sich aber im Allgemeinen nach praktischen Gesichtspunkten. Sowohl sehr kleine als auch sehr große Granulate lassen sich beim Verpacken oder Weiterverarbeiten oft nur schlecht handhaben. Beispielsweise werden sie nur schlecht in die verarbeitende Maschine eingezogen oder lassen sich nur schlecht dosieren. Die Granulate können länglich bis rund sein. Bevorzugt werden Granulate deren längste Achse im Bereich von 0,5 bis 10 mm, bevorzugt im Bereich von 0,8 bis 5 mm und deren kürzeste Achse im Bereich von 0,2 bis 5 mm, bevorzugt im Bereich von 0,5 bis 5 mm liegt. Für viele Anwendungen werden Granulate bevorzugt, die rund oder nahezu rund sind, d.h. deren Aspektverhältnis (Verhältnis längste zu kürzeste Achse) im Bereich von 3,5 bis 1, bevorzugt im Bereich von 2 bis 1 liegt. Die Größe und die Form der Granulate lässt sich beispielsweise über die Größe der Düse durch die die Polymerschmelze gedrückt wird, beeinflussen, aber auch durch den Durchsatz, die Viskosität der Polymerschmelze und die Geschwindigkeit mit der diese zerteilt wird. Derartige Maßnahmen sind dem Fachmann bekannt oder er kann sie nach an sich bekannten Methoden vornehmen (z.B. Granulieren von Thermoplasten: Systeme im Vergleich, Jahrestagung Aufbereitungstechnik, Baden-Baden, 24./25. 11. 99, VDI Verlag S. 327 bis 401).

Nach den erfindungsgemäßen Verfahren herstellbare Granulate haben eine Konturfläche, die weniger als 10%, bevorzugt weniger als 8 %, insbesondere weniger als 5 %, bezogen auf die Gesamtkonturfläche eines Ensembles von Granulaten, an konkaven Stellen aufweist. Besonders bevorzugt sind defektfreie Granulate, jedoch lassen sich Granulate, deren Konturfläche beispielsweise von 1 bis 3 % oder von 1 bis 2 %, bezogen auf die Gesamtkonturfläche, konkave Stellen haben, bereits zu sehr einheitlich gefärbten Formteilen verarbeiten.

Die Bestimmung des Anteils an konkaven Stellen wird durch Auflicht-Interferenzkontrastspektroskopie durchgeführt. Hierzu wird eine definierte Anzahl an Granulaten, also ein Ensemble, untersucht.

Die Anzahl an Granulaten im jeweiligen Ensemble wird dabei so groß gewählt, dass eine statistische Auswertung möglich ist. Die Mindestzahl beträgt 10 Granulate. Die Granulate werden mit einer, mit einem Haftmittel versehenen, Fläche auf einen Glasobjektträger fixiert. In einem Lichtmikroskop (beispielsweise Zeiss Axiophot) werden die Granulate unter polarisiertem Auflicht (zwischen gekreuzten (90°) Polarisatoren) betrachtet. Die Vergrößerung wird so gewählt, dass jeweils gerade das gesamte Granulat abgebildet wird. Granulate ohne konkave Stellen zeigen punkt- oder strichförmige Reflexe. Granulate mit konkaven Stellen zeigen ringförmige Reflexe. Zu deren Charakterisierung wird im digitalisierten Bild mit Hilfe einer Bildanalyse-Software (z.B. analySIS) der ringförmige Reflex umfahren. Ohne die Krümmung des Oberfläche des Granulates zu berücksichtigen, wird die zu der Kontur gehörende eingeschlossene Fläche bestimmt. Diese Fläche wird als Konturfläche bezeichnet. Ebenso wird die Kontur des Teils der Granulatoberfläche, die unter dem Mikroskop sichtbar ist, umfahren. Wiederum wird, ohne die Krümmung des Oberfläche des Granulates zu berücksichtigen, die zu der Kontur gehörende eingeschlossene Fläche bestimmt. Diese Fläche wird als Gesamtkonturfläche bezeichnet. Das Verhältnis der Konturfläche zur Gesamtkonturfläche [%] ist ein Maß für die Größe der konkaven Stelle. Auf diese Weise wird jedes Ensemblemitglied vermessen und das arithmetische Mittel der Verhältnisse für das Ensemble bestimmt.

Dies bedeutet, dass die Granulate gemäß dieser Erfindung eine weitgehend glatte Oberfläche aufweisen, worunter zu verstehen ist, dass sie im wesentlichen keine Dellen aufweisen. Dies heißt, dass das Granulat an jeder Stelle seiner Oberfläche oder zumindest zu wesentlichen Anteilen seiner Oberfläche konvex gewölbt ist. Unter einer Delle wird jede Einbuchtung in Richtung des Granulatinneren verstanden. Eine Delle kann dabei eine leichte Einbuchtung sein, aber auch eine sehr tiefe Delle, sprich ein Loch.

Die bevorzugten Granulate weisen weniger als 10 %, bevorzugt weniger als 8 %, insbesondere weniger als 5 %, bezogen auf die Gesamtzahl eines Ensembles von Granulaten, Vakuolen auf. Besonders bevorzugt sind defektfreie Granulate, jedoch lassen sich Granulate mit z.B. einem Anteil von 1 bis 3 %, bezogen auf die Gesamtzahl eines Ensembles von Granulaten, bereits zu sehr guten eingefärbten Formteilen verarbeiten. Unter Vakuole wird der Anteil an dem durch die Oberfläche des Granulates begrenzten Volumens verstanden, der nicht durch die Masse des Polymeren und auch nicht durch einen anderen Feststoff oder eine Flüssigkeit eingenommen wird, sprich ein abgeschlossener, unzugänglicher Hohlraum. Die Granulate, die eine Vakuole enthalten, können gleichzeitig an der Stelle, an der sich die Vakuole gebildet hat, auch eine kleine konkave Stelle aufweisen. Aber es können auch Granulate mit defektfreier Oberfläche eine Vakuole beinhalten.

Da die aus dem Stand der Technik bekannte Trennanalyse in Natriumchloridlösung nicht zu eindeutigen und wiederholbaren Ergebnissen führt, erfolgt die Bestimmung der Vakuolenanteile erfindungsgemäß mittels Trennanalyse in Wasser/Deuteriumoxid-Mischung. Hierzu wird in einem ersten Schritt aus den Granulaten ein Probeplättchen gespritzt, anhand dessen die Dichte des zu untersuchenden Materials festgestellt wird. Alternativ kann die Dichte auch gemäß ISO 1183 bestimmt werden. Danach wird aus D₂O und H₂O eine Mischung einer Dichte hergestellt, die etwa 1 % unterhalb der Dichte des Materials liegt und bei der das kompakte Material langsam zu Boden sinkt. Anschließend werden 10g einer Granulatprobe (Auswahl siehe oben) in 100g der Mischung aus D₂O und H₂O, die mit 1 g des Tensids K30 (Gemisch aus überwiegend sekundären Natriumalkylsulfonaten einer mittleren Kettenlänge von C-15) der Firma Bayer AG versetzt wird, für einen Zeitraum von 5 Minuten intensiv gerührt. Granulate, die Vakuolen enthalten, schwimmen auf, während die restlichen Granulate absinken. Der Versuch wird dreimal wiederholt und der arithmetische Mittelwert der Anzahl der aufgeschwommenen Granulate, bezogen auf den Mittelwert der Gesamtzahl der untersuchten Granulate bestimmt.

Darüber hinaus zeichnen sich die erfindungsgemäßen Granulate im Allgemeinen durch eine Restfeuchte von weniger als 0,5 %, bevorzugt weniger als 0,3 %, insbesondere im Bereich von 0,01 bis 0,15 Gew.-%, bezogen auf das Gesamtgewicht eines Ensembels aus. Die Restfeuchte wird durch gravimetrische Trocknung bestimmt. Hierzu wird eine definierte Menge (z.B. 1 oder 10g) an Granulaten eingewogen und bei einer definierten Temperatur, die für SAN bei 160°C liegt, für einen Zeitraum von 20 min, getrocknet. Der prozentuale Masseverlust entspricht dem Restfeuchtegehalt.

Prinzipiell können als Polymere, aus denen die Granulate hergestellt werden können, alle thermoplastisch verarbeitbare Polymere verwendet werden. Bevorzugt werden Polymere, die eine Erweichungstemperatur (Vicat-Erweichungstemperatur bei einer Kraft von 50 N und einer Temperatursteigerung von 50 K/h, VST/B/50 gemäß ISO 306) im Bereich von 60 bis 250°C, bevorzugt im Bereich von 80 bis 180°C aufweisen und deren Schmelze sich bei Temperaturen im Bereich von 150 bis 350°C, bevorzugt 180 bis 320°C, insbesondere 200 bis 300°C verarbeiten lässt. Solche können beispielsweise aus der Klasse der Polyacetale, Polyacrylate, Polycarbonate, Polyamide, Polyester, Polymethacrylate, Polyolefine, Polyphenylenether, Polystyrole, Styrolcopolymere, Polyurethane, Polyvinylacetate, Polyvinylchloride oder Polyvinylether sein. Es können auch Mischungen aus zwei oder mehreren unterschiedlichen Polymeren verwendet werden.

Bevorzugt werden Granulate auf der Basis von Styrolcopolymerisaten, z.B. Styrol/Acrylnitrilcopolymere, oft auch bezeichnet als SAN-Copolymere, Acrylnitril/Butadien/Styrolcopolymere, oft auch bezeichnet als ABS, Acrylnitril/Acrylat/Styrolcopolymere, oft auch bezeichnet als ASA. Hierunter sollen auch Derivate oder Varianten von SAN-Copolymeren, ABS und ASA verstanden werden, wie solche auf der Basis von alpha-Methylstyrol oder Methacrylat oder solche die weitere Comonomere umfassen, beispielsweise das sogenannte MABS. Selbstverständlich können auch Mischungen von zwei oder mehreren unterschiedlichen Styrolcopolymerisaten eingesetzt werden. Styrolcopolymerisate sind dem Fachmann bekannt oder nach an sich bekannten Methoden herstellbar. Bevorzugt werden auch Mischungen der genannten Styrolcopolymerisate mit Polyamiden, Polybutylenterephthalaten und/oder Polycarbonaten.

Die Polymere können als solche verwendet werden. Sie können aber auch Zusatzstoffe wie Gleit- oder Entformungsmittel, Wachse, Flammschutzmittel, Antioxidantien, Stabilisatoren gegen Lichteinwirkung oder Antistatika enthalten. Bevorzugt enthalten die Polymere keine faser- oder pulverförmige Verstärkungsmittel. Besonders bevorzugt enthalten sie darüber hinaus auch keine Farbmittel wie Pigmente oder Farbstoffe.

Die Granulate können mittels eines mehrstufigen Verfahrens hergestellt werden. Zunächst wird das zu granulierende thermoplastische Polymere in einer Plastifiziereinheit geschmolzen. Hierzu werden bevorzugt Knetmaschinen eingesetzt. Insbesondere kommen Extruder, beispielsweise ein- oder zweiwellige Maschinen, in Betracht. In einer der bevorzugten Ausführungsformen werden in dem erfindungsgemäßen Verfahren Extruder eingesetzt, die auch dazu ausgerüstet sind wasserfeuchte Polymere zu entwässern, die beispielsweise direkt aus dem Herstellprozess stammen. Darunter werden solche Extruder bevorzugt, bei denen das Restwasser zumindest teilweise flüssig aus dem Extruder austritt. Besonders bevorzugt werden derartige Extruder eingesetzt, wenn Granulate auf der Basis von Styrolcopolymeren oder Blends, die Styrolcopolymere enthalten, insbesondere ABS, ASA oder MABS hergestellt werden sollen. Derartige Extruder sind bekannt und beispielsweise in der EP A1 734 825 beschrieben.

In einem ersten Verfahrensschritt wird die Polymerschmelze durch eine Düse gedrückt. Als Düse kann beispielsweise eine Lochplatte eingesetzt werden, wie eine Lochplatte mit Kreisführung, verwendet werden. Als Lochplatten kommen im allgemeinen beheizte Lochplatten in Betracht so solche mit Kern-Rand-Beheizung, solche vom Heizkanal-Typ oder vom Wärmetauscher-Typ. Darunter sind Heizkanal- und Wärmetauschertypen bevorzugt.

Erfindungsgemäß wird die Polymerschmelze in einer mit eine flüssigen Kühlmittel gefluteten Schneidkammer gedrückt. Die Schneidkammer umgibt die Düse, z.B. die Lochplatte und die Vorrichtung mit der die Polymerschmelze zerteilt wird. Die Größe und Gestalt der Schneidkammer ist prinzipiell frei wählbar und richtet sich nach praktischen Gesichtspunkten wie Größe der Lochplatte, Geometrie der Messer, Kühlmittelmenge, die durch die Schneidkammer transportiert werden soll oder Durchsatz an Polymer.

Als Kühlmittel wird meist Wasser eingesetzt. Es kann prinzipiell jedes optisch klare Wasser eingesetzt werden, beispielsweise filtriertes Flusswasser oder Brunnenwasser. Bevorzugt wird demineralisiertes Wasser verwendet. Im Allgemeinen zeigt das verwendete demineralisierte Wasser Leitfähigkeiten von weniger als 20 µS/cm, bevorzugt weniger als 12 µS/cm, wobei die Bestimmung nach DIN EN 27888 in Verbindung mit DIN 50930-6, erfolgt.

Es können aber auch andere Kühlmittel wie ein- oder mehrwertige Alkohole z. B. Glykol oder Paraffine verwendet werden.

Das Kühlmittel wird gemäß einer bevorzugten Ausführungsform bei Normaldruck angewandt. Die Temperatur des Kühlmittels beträgt dabei im Allgemeinen von 60 bis 95°C. Bevorzugt liegt die Temperatur des Kühlmittels im Bereich von 70 bis 95°C, insbesondere im Bereich von 80 bis 95°C, beispielsweise im Bereich von 80 bis 90°C. Das Kühlmittel kann aber auch gemäß einer anderen bevorzugten Ausführungsform unter erhöhtem Druck angewandt werden. So kann das Kühlmittel bis zu 130°C aufweisen, beispielsweise unter erhöhtem Druck bei einer Temperatur im Bereich von 60 bis 130°C, bevorzugt 70 bis 100°C, insbesondere 80 bis 98°C angewandt werden.

So kann es bevorzugt sein, dass der Druck bis zu 6 bar beträgt, z.B. von 1 bis 5 bar beträgt. Beispielsweise kann der Druck im Bereich von 1 bis 4, bevorzugt 1 bis 3, insbesondere 1 bis 2 bar betragen. Nach einer der bevorzugten Ausführungsformen steht das Kühlmittel in der Schneidkammer unter einem Druck von mindestens 1,1 bar. Dies ist dann z.B. besonders bevorzugt wenn das Kühlmittel einen niedrigen Siedepunkt hat, beispielsweise wenn Wasser als Kühlmittel verwendet wird und bei einer Kühlmitteltemperatur von über 100°C gearbeitet werden soll.

In einem zweiten Schritt wird die Polymerschmelze zerteilt. Hierfür können Schneidevorrichtungen wie rotierende Messer vorgesehen werden. Hierbei werden bevorzugt mehrarmige rotierende Messer eingesetzt. Beispielsweise werden Messerköpfe mit 6, 8, 12, 14 oder mehr beispielsweise bis 50 rotierende Messer verwendet (wobei deren Anzahl nicht zwingend eine gerade Zahl zu sein braucht). Diese sind im Allgemeinen so angebracht, dass sie vor der Düse, z.B. der beheizten Düsenplatte, in der Schneidkammer rotieren. Die Drehzahlen liegen beispielsweise im Bereich von 300 bis 5000 Umdrehungen pro Minute. Die Messereinstellung kann manuell, pneumatisch oder hydraulisch vorgenommen werden oder automatisch durch Federkraft erfolgen. Diese Maßnahmen sind dem Fachmann bekannt.

Zwischen dem Austritt der Polymerschmelze und dem Zerteilen derselben liegen im Allgemeinen sehr kleine Zeiträume. Diese betragen erfindungsgemäß nicht mehr als 20 ms bevorzugt nicht mehr als 10 ms, insbesondere nicht mehr als 5 ms. Da die Polymerschmelze bei ihrem Austritt aus der Düse im Allgemeinen eine Temperatur im Bereich von 150 bis 350°C, bevorzugt 180 bis 320°C, insbesondere 200 bis 300°C aufweist, liegt die Temperatur der Polymerschmelze während des Schneidens in der Regel nicht mehr als von 10 bis 20 °C unter der Austrittstemperatur.

Erfindungsgemäß werden die in dem zweiten Schritt erhaltenen Granulate in einem dritten Schritt abgekühlt. Die bevorzugte Abkühlrate ist dabei abhängig von der Art des Polymeren. Erfindungsgemäß beträgt die Abkühlrate 2 bis 30°C/s, bevorzugt im Bereich von 5 bis 20°C/s, insbesondere im Bereich von 8 bis 15°C/s. Während des Abkühlschrittes beträgt das Volumenverhältnis von Granulat zu Kühlmittel in der Regel von 0,03 : 1 bis 0,12 :1, bevorzugt von 0,06 :1 bis 0,1 :1. Im Allgemeinen ist es bevorzugt, wenn die Granulate nach dem dritten Schritt eine Außentemperatur von 100 bis 200°C, bevorzugt von 100 bis 150°C aufweisen. Diese Temperaturbestimmung erfolgt durch Entnahme einer definierten Probemenge, Entfernen des anhaftenden Kühlmittels und Messen der Temperatur mittels einer IR-Kammer.

Bevorzugt ist es, die Granulate in dem gleichen Kühlmittel abzukühlen in das die Polymerschmelze gedrückt und in dem sie zerteilt wird. Vorzugsweise findet der dritte Verfahrensschritt außerhalb der gefluteten Schneidkammer statt.

Während die Granulate abkühlen werden sie bevorzugt gleichzeitig zu einer Trocknungsvorrichtung transportiert. Dabei kann dem Kühlmedium während der gesamten Transportstrecke Wärme entzogen werden. Dem Kühlmedium kann aber auch nur auf Teilstücken der Transportstrecke Wärme entzogen werden. Nach einer besonders bevorzugten Ausführungsform wird auf einem ersten Teilstück der Transportstrecke dem Kühlmedium keine Wärme entzogen, und in einem zweiten Teilstück wird dem Kühlmedium Wärme entzogen. Das erste Teilstück kann bis zu 80 % der gesamten Transportstrecke lang sein, beispielsweise kann seine Länge bis zu dreiviertel der gesamten Transportstrecke betragen.

Die Granulate können beispielsweise in üblichen Trocknungsvorrichtungen, wie sie in der Fachliteratur beschrieben sind, getrocknet werden. Beispiele geeigneter Trocknungsvorrichtungen sind Zentrifugaltrockner oder Wirbelbetttrockner (siehe oben S. 333 bis S.336). Besonders bevorzugt werden Trocknungsvorrichtungen, in denen die nach dem dritten Schritt vorhandene Restwärme des Granulates mit benutzt werden kann, um den Trocknungsvorgang zu unterstützen.

Die so erhaltenen Granulate eigenen sich zur Herstellung von Formteilen, Folien oder Fasern, die Farbmittel enthalten. Insbesondere eigenen sich die Granulate zur Herstellung großflächiger, gleichmäßig eingefärbter, Formteile oder gleichmäßig eingefärbter Folien. Besonders eignen sich die Granulate dazu mit Farbmitteln wie Farbpigmenten vermischt zu werden, indem diese oberflächig, gegebenenfalls zusammen mit Haftvermittlern, auf die Granulate aufgebracht werden und dann die so oberflächlich mit den Farbmitteln beschichteten Granulate in Spritzgussvorrichtungen ohne besondere zusätzliche Mischvorrichtungen aufgeschmolzen und die Formen gespritzt zu werden. Ebenso können aus den Granulaten gefärbte Formteile oder Folien hergestellt werden, deren Farbe an ein zweites separat hergestelltes Formteil oder eine zweite separat hergestellte Folie angepasst ist. Außerdem ist es sehr viel einfacher möglich die Farbe einer Vorlage z.B. eines Musterplättchens in einem Formteil oder einer Folie einzustellen. Aufgrund der ebenmäßigen Oberfläche lassen sich Farbmittel sehr gleichmäßig in die Granulate einarbeiten. Die Formteile, Folien oder Fasern, die aus den erfindungsgemäßen Granulaten erhältlich sind, sind im wesentlichen homogen eingefärbt, d.h. die Farbdifferenz, bestimmt als Farbabstand ΔE (gemäß CIELAB-Formel, DIN 6174, D65, 10° Normalbeobachter), ist klein. Ob eine Farbdifferenz als solche wahrgenommen wird, hängt vom absoluten Farbort ab, d.h. ob es sich um eine helle oder dunkle Farbe handelt. Erfindungsgemäßen Formteile, Folien oder Fasern, die beispielsweise weiß eingefärbt sind, weisen bevorzugt ΔE-Werte von weniger als 0, 3, insbesondere weniger als 0,2 auf. Beispielsweise dunkelbraun eingefärbte Formteile, Folien oder Fasern weisen bevorzugt ΔE-Werte von weniger als 0,5, bevorzugt weniger als 0,3 auf.

Darüber hinaus enthalten die aus den Granulaten hergestellten Formteile keine sogenannten "Silberstreifen". Ferner ist die Oberfläche der aus den Granulaten hergestellten Formteile im wesentlichen frei von Blasen.

### Beispiele

### Bestimmung des Anteil an konkaven Stellen:

Die Bestimmung des Anteils an konkaven Stellen erfolgte sowohl visuell als auch mittels Auflicht-Interferenzkontrastspektroskopie. Hierzu wurde eine definierte Anzahl an Granulaten, also ein Ensemble, untersucht. Dabei verfuhr man bei der Auswahl des Ensembles so, dass man dem Granulatstrom drei Proben gleichen Gewichts zu drei unterschiedlichen Zeitpunkten entnahm, die drei Proben intensiv mischte und dieser Mischung das zu prüfende Ensemble entnahm.

Die Anzahl betrug jeweils 10, 50 oder 100 Granulate. Die Granulate wurden mit der Flachseite auf einen Glasobjektträger fixiert. In einem Lichtmikroskop (Zeiss Axiophot) wurden die Granulate unter polarisiertem Auflicht (zwischen gekreuzten (90°) Polarisatoren) betrachtet. Die Vergrößerung wurde so gewählt, dass jeweils gerade das gesamte Granulat abgebildet wurde. Granulate ohne konkave Stellen zeigten punkt- oder strichförmige Reflexe. Granulate mit konkaven Stellen zeigten ringförmige Reflexe. Zu deren Charakterisierung wurde im digitalisierten Bild mit Hilfe einer Bildanalyse-Software (analySIS) der ringförmige Reflex umfahren. Ohne die Krümmung des Oberfläche des Granulates zu berücksichtigen, wurde die zu der Kontur gehörende (d.h. zu dem ringförmigen Reflex gehörende) eingeschlossene Fläche bestimmt (Konturfläche). Ebenso wurde die Kontur des Teils der Granulatoberfläche, die unter dem Mikroskop sichtbar war, umfahren. Wiederum wurde, ohne die Krümmung der Oberfläche des Granulates zu berücksichtigen, die zu der Kontur gehörende eingeschlossene Fläche bestimmt (Gesamtkonturfläche). Das Verhältnis der Konturfläche zur Gesamtkonturfläche [%] ist ein Maß für die Größe der konkaven Stelle. Auf diese Weise wurde jedes Ensemblemitglied vermessen und das statistische Mittel der Verhältnisse für das Ensemble bestimmt.

### Bestimmung des Anteils an Vakuolen:

Trennanalyse in Wasser/Deuteriumoxid-Mischung. Hierzu wurde in einem ersten Schritt aus den Granulaten ein Plättchen gespritzt, anhand dem die Dichte des zu untersuchenden Materials festgestellt wurde. Danach wurde aus D₂O und H₂O eine Mischung einer Dichte hergestellt, die unterhalb der Dichte des Materials lag und bei der das kompakte Material langsam zu Boden sank. Anschließend wurden 10g einer Granulatprobe in 100g der Mischung aus D₂O und H₂O, die mit 1g des Tensids K30 (Gemisch aus überwiegend sekundären Natriumalkylsulfonaten einer mittleren Kettenlänge von C-15 der Firma Bayer AG) versetzt wird, für einen Zeitraum von 5 Minuten intensiv gerührt. Granulate, die Vakuolen enthielten schwimmen auf während die restlichen Granulate absanken. Der Versuch wurde dreimal wiederholt und der Mittelwert der Anzahl der aufgeschwommenen Granulate, bezogen auf den Mittelwert der Gesamtzahl der untersuchten Granulate bestimmt.

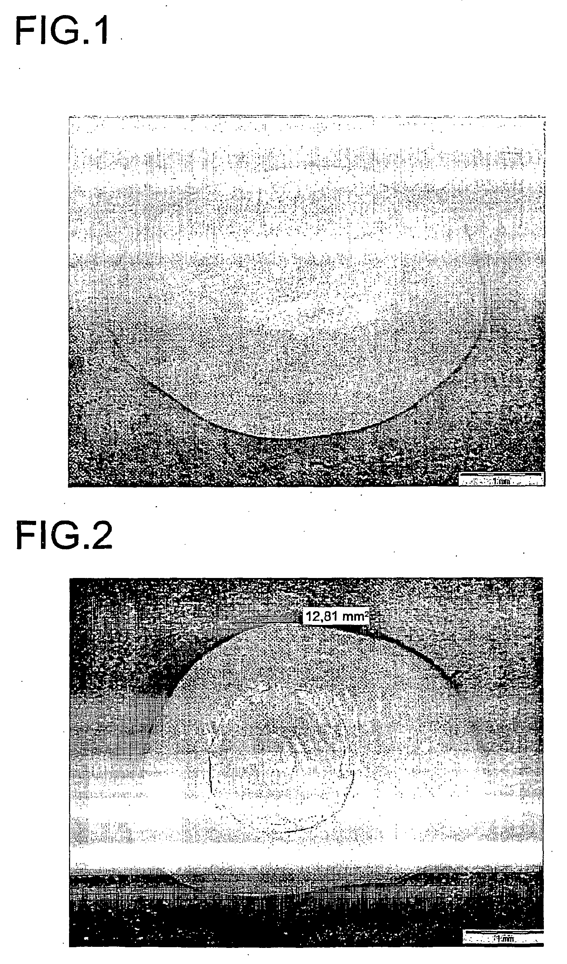

- Fig. 1:: Abbildung eines Granulates mit strichförmigem Reflex
- Fig. 2:: Abbildung eines Granulates mit konkaver Stelle

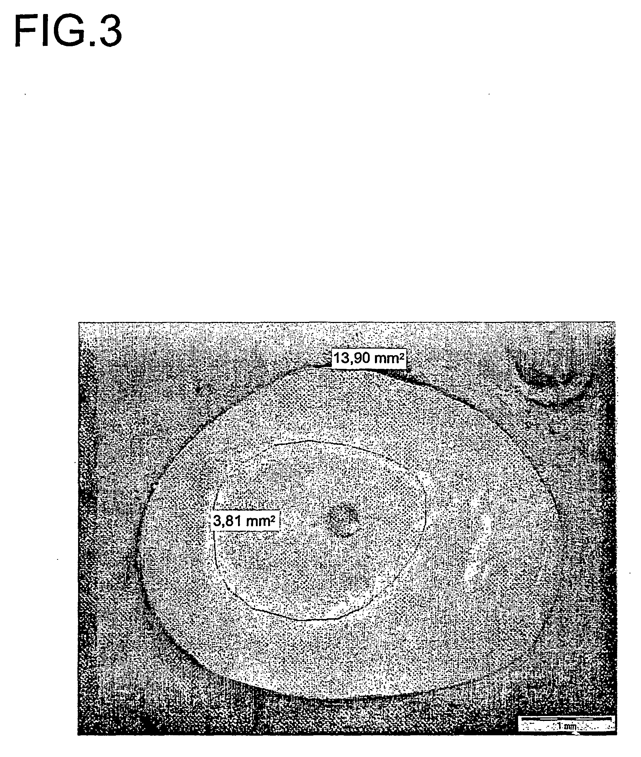

- Fig. 3:: Abbildung eines Granulates mit konkaver Stelle und Vakuole

### Erfindungsgemäßes Beispiel 1 und Vergleichsbeispiele 1V und 2V

Ein ABS mit einem Anteil von ca. 30 Gew.-% Kautschuk wurde in einer mit Wasser gefluteten Schneidkammer granuliert.

Die Temperatur der Schmelze betrug ca. 250°C. Die Schneidvorrichtung hatte 10 Klingen und ihre Umdrehungszahl betrug 3000 UPM. Die weiteren Bedingungen und die Ergebnisse sind Tabelle 1 zu entnehmen.

**Tabelle 1:**

| Beispiel | Vₚ:V_{w}^{a)} | T_{w}[°C]^{b)} | Druck^{c)} [bar] | Aussehen Granulate | Anzahl^{d)} Dellen pro 50 Granulate |
|---|---|---|---|---|---|
| 1V | 0,06 | 75 | 1 | Dellen + Vakuolen | n.b. |
| 2V | 0,08 | 82 | 1 | Dellen | 45 ± 1,5 |
| 1 | 0,093 | 95 | 1,8 | Im Wesentlichen defektfrei | 1 ± 1 |

| | | | | | |
|---|---|---|---|---|---|
| ^{a)} Volumenverhältnis Polymer/Wasser in der Schneidkammer und der Transportstrecke ^{b)} Wassertemperatur in der Schneidkammer ^{c)} Druck in der Schneidkammer ^{d)} Die Anzahl der Dellen wurde durch Auszählen bestimmt. Hierzu wurde eine Probe von 50 Granulaten auf einer Unterlage fixiert und von drei verschiedenen Personen bei einer 10-fachen Vergrößerung ausgewertet. n.b.: nicht bestimmt | | | | | |

### Quantitative Bestimmung der Dellen Vergleichsbeispiel 2V.

Eine Probe von 10 Granulaten wurde anhand der Auflicht-Interferenzspektroskopie vermessen.

Es ergaben sich folgende Werte:

| Granulatfläche [mm²] | Fläche der Delle [mm²] | % Delle zur Gesamtfläche |
|---|---|---|
| 13,90 | 3,81 | 27,4 |
| 12,56 | 3,68 | 29,3 |
| 13,45 | 3,39 | 25,2 |
| 13,22 | 2,99 | 22,6 |
| 12,81 | 1,52 | 12,1 |
| 11,88 | 3,35 | 28,2 |
| 11,00 | 2,89 | 26,3 |
| 12,00 | 1,21 | 10,1 |
| 14,48 | 4,15 | 28,7 |
| 12,84 | 2,98 | 23,2 |

Der Mittelwert % Dellen zur Gesamtfläche betrug 23,3 ± 6,8.

### Erfindungsgemäßes Beispiel 1

Eine Probe von 10 Granulaten wurde anhand der Auflicht-Interferenzspektroskopie vermessen.
9 von den 10 Granulaten wiesen nur punkt- oder strichförmige Reflexe auf. Die Konturfläche des Granulates mit Delle betrug 12,95 mm². Die Konturfläche der Delle betrug 1,14 mm². Damit betrug das Verhältnis der Konturfläche zur Gesamtkonturfläche 8,8%.

### Erfindungsgemäßes Beispiel 2

Ein Copolymer mit einem Anteil von 30 Gew.-% Acrylnitril und 70 Gew.-%
*α*-Methylstyrol wurde unter den Bedingungen des Beispiel 1 granuliert. Die erhaltenen Granulate waren gleichförmig und wiesen eine glatte Oberfläche ohne Dellen und Vakuolen auf. Die Dichte betrug 1,0825 ± 0005 g/cm³ und die Restfeuchte betrug ca. 0,1 %.

Die Trennanalyse ergab dass von 50 Granulaten 49 absanken.

### Vergleichsbeispiel 3V

Das gleiche Copolymer wie es für Beispiel 2 verwendet wurde, wurde unter den Bedinungen des Vergleichsbeispiels 1V jedoch bei T_{w} = 70 °C granuliert. Die Granulate wiesen einen Konturflächenanteil zwischen 10 und 30 % auf. Die Dichte betrug 1,0378 ± 0,02 g/cm³. Die Restfeuchte betrug ca. 0,7 %. Die Trennanalyse wurde mit unterschiedlicher Granulatzahl durchgeführt. Die Ergebnisse sind Tabelle 2 zu entnehmen.

**Tabelle 2:**

| Anzahl Granulat | Anzahl aufgeschwommen | Anzahl abgesunken | % vakuolenfreies Granulat |
|---|---|---|---|
| 79 | 64 | 15 | 81 |
| 50 | 41 | 9 | 82 |
| 30 | 22 | 8 | 73 |

## Patentansprüche

1. Verfahren zur Herstellung von Granulaten auf der Basis mindestens eines thermoplastisch verarbeitbaren Polymeren, die weniger als 10 % konkave Stellen aufweisen und im übrigen an jeder anderen Stelle konvex sind, bestimmt anhand des Mittelwertes der Verhältnisse der Konturfläche zur Gesamtkonturfläche für ein Ensemble von Granulaten mittels Auflicht-Interferenzkontrastspektroskopie, **dadurch gekennzeichnet, dass** es die folgenden Schritte umfasst:
- die Polymerschmelze durch eine Düse in eine mit einem Kühlmittel geflutete Schneidkammer gedrückt wird,
- die Polymerschmelze zerteilt wird, wobei die Zeitspanne zwischen dem Zeitpunkt des Austritts der Polymerschmelze aus der Düse und dem Zerteilen in Granulate weniger als 20 ms beträgt und
- die so entstandenen Granulate in einem flüssigen Kühlmittel einer Temperatur im Bereich von 60 bis 130°C mit einer Abkühlrate von 2 bis 30°C/s abgekühlt werden.

2. Verfahren nach Anspruch 1, **dadurch gekennzeichnet dass** das Volumenverhältnis von Granulat zu Kühlmittel in der Abkühlphase im Bereich von 0,03 : 1 bis 0,12 : 1 liegt.

3. Verfahren nach Anspruch 1 oder 2, **dadurch gekennzeichnet dass** das Kühlmittel in der Schneidkammer unter einem Druck von mindestens 1,1 bar steht.

## Claims

1. A process for producing pelletized materials based on at least one thermoplastically processable polymer, where the pellets have less than 10% of concave regions and otherwise are convex in every other region, this being determined by means of incident-light interference-contrast spectroscopy, by taking the average value for the ratios of the outline area to the entire outline area for an assembly of pellets, which comprises the following steps:
- extruding the polymer melt through a die into a cutting chamber flooded with a coolant,
- comminuting the polymer melt, the interval between the juncture of discharge of the polymer melt from the die and the comminution to give pellets being less than 20 ms, and
- cooling the resultant pellets in a liquid coolant at a temperature in the range from 60 to 130°C, using a cooling rate of from 2 to 30°C/s.

2. The process according to claim 1, wherein the ratio by volume of pellets to coolant in the cooling phase is in the range from 0.03:1 to 0.12:1.

3. The process according to claim 1 or 2, wherein the coolant in the cutting chamber is subject to a pressure of at least 1.1 bar.

## Revendications

1. Procédé de fabrication de granules à base d'au moins un polymère thermoplastiquement transformable qui présentent moins de 10% de points concaves et sont par ailleurs convexes en chaque autre point, déterminé à l'aide de la valeur moyenne des rapports de la surface de contour à la surface totale de contour pour un ensemble de granules par spectroscopie de lumière incidente-contraste des interférences, **caractérisé en ce qu'**il comprend les étapes suivantes:
- la fusion de polymère est injectée par une buse dans une chambre de coupe inondée d'un agent réfrigérant,
- la fusion de polymère est divisée, la durée entre le moment de sortie de la fusion de polymère hors de la buse et la division en granules étant inférieure à 20 ms, et
- les granules obtenus de cette manière sont refroidis avec un agent réfrigérant liquide d'une température dans l'intervalle compris entre 60 et 130°C à une vitesse de réfrigération de 2 à 30°C/s.

2. Procédé selon la revendication 1, **caractérisé en ce que** le rapport volumique de granule à agent réfrigérant dans la phase de réfrigération se situe dans l'intervalle entre 0,03:1 et 0,12:1.

3. Procédé selon la revendication 1 ou 2, **caractérisé en ce que** l'agent réfrigérant dans la chambre de coupe est à une pression d'au moins 1,1 bar.
